# EUROPEAN PATENT APPLICATION

(11) **EP 4 750 138 A1**
(43) Date of publication of application: **27.05.2026**
(21) Application number: 24845869.7
(22) Date of filing: 09.07.2024
(51) Int. Cl.: H04W 28/02, H04W 76/11, H04W 76/16, H04W 60/00, H04W 8/22, H04W 88/14

(54) **METHOD FOR ALLOCATING EBI FOR DUAL 3GPP ACCESS**

(30) Priority: 21.07.2023 US 202363528078 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR); KIM, Seokjung, Seoul 06772 (KR)
(74) Representative: Plasseraud IP
(86) International application number: PCT/KR2024/009749
(87) International publication number: WO 2025/023566

(57) **Abstract**

One disclosure in the present specification provides a method by which an AAnF communicates. The method comprises the steps of: receiving a registration request from a UE through a first 3GPP access; receiving an establishment request for a PDU session through the first 3GPP access from the UE; transmitting an SM context request to an SMF on the basis of the establishment request message; receiving, from the SMF, a request for allocation of an EBI for a first QoS flow related to the PDU session; allocating a first EBI for the QoS flow on the basis of the allocation request; and transmitting information on the first EBI to a UDM.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A method is needed to address the issue of same EBI being allocated when a terminal has two different serving AMFs due to dual 3GPP access.

### DESCLOSURE

### TECHNICAL SOLUTION

The AMF that first allocates an EBI transmits the allocated EBI to the AMF that allocates the next EBI via UDM.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIGS. 6 and 7 show an example of a registration procedure to which implementations of the present disclosure is applied.
FIGS. 8 and 9 show an example of a PDU session establishment procedure to which implementations of the present disclosure is applied.
FIG. 10 shows an example flowchart according to the first embodiment of the present disclosure.
FIG. 11 shows an example of a flowchart according to the fourth embodiment of the present specification.
FIG. 12 shows an example of an EPS bearer context state information element according to an embodiment of the present specification.
FIG. 13 shows the procedure of the AMF according to disclosure of the present specification.
FIG. 14 shows the procedure of the UDM according to disclosure of the present specification.
FIG. 15 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

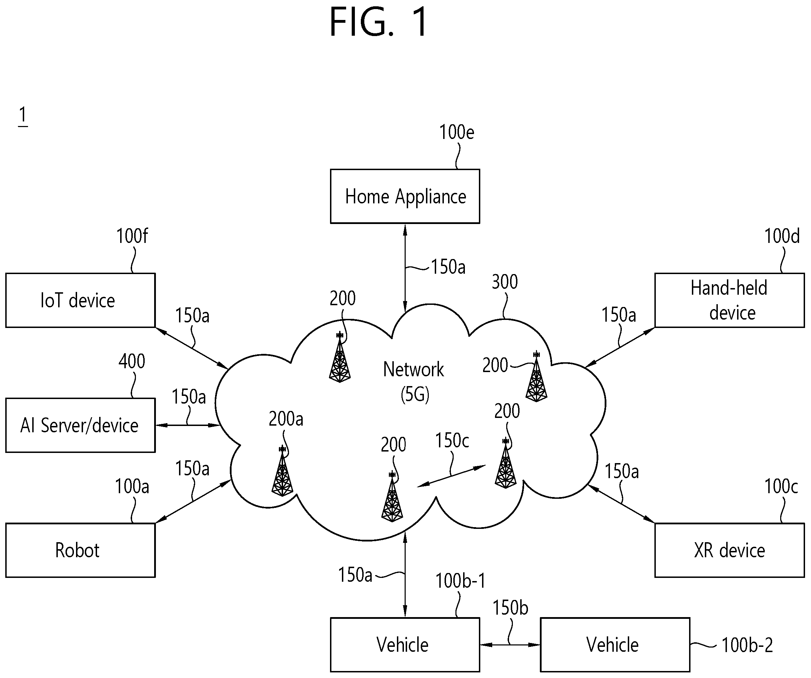

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

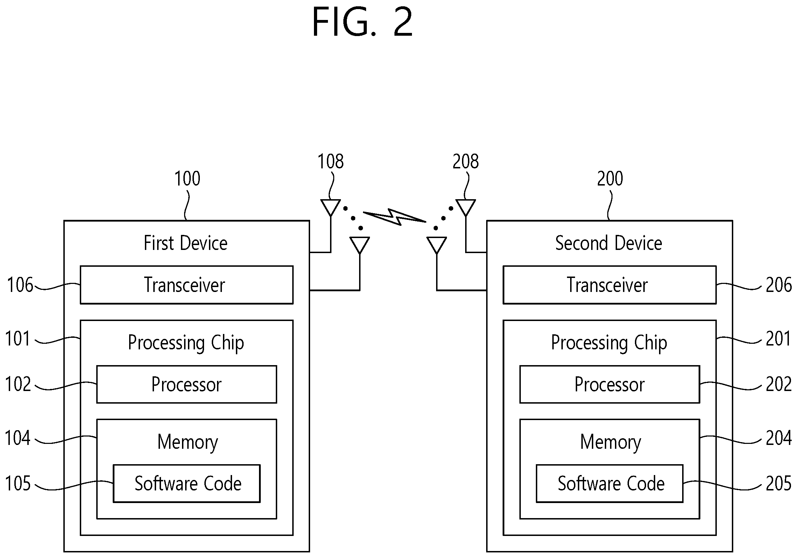

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modern/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modern/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

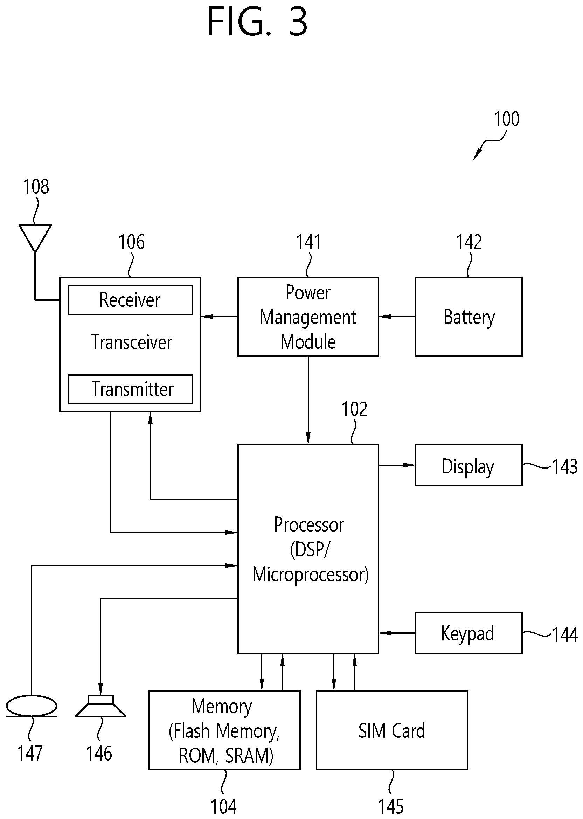

**FIG. 3** **shows an example of UE to which implementations of the present disclosure is applied.**

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

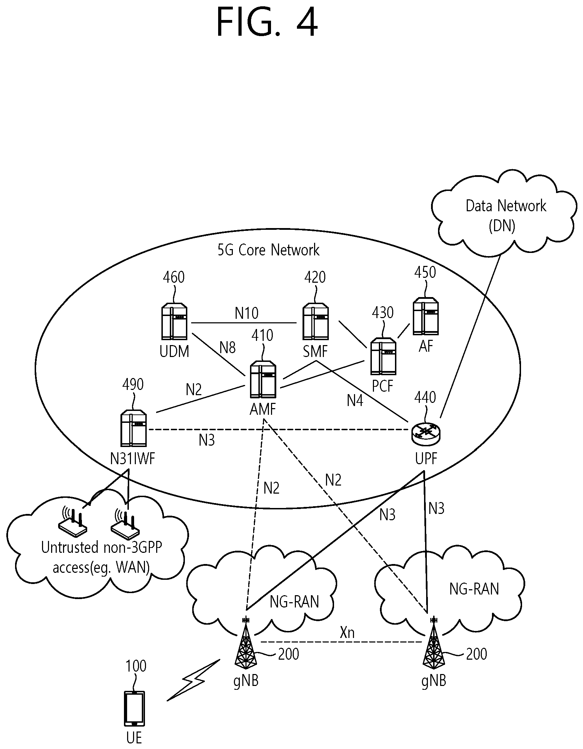

**FIG. 4** **is a block diagram of a next generation cellular network.**

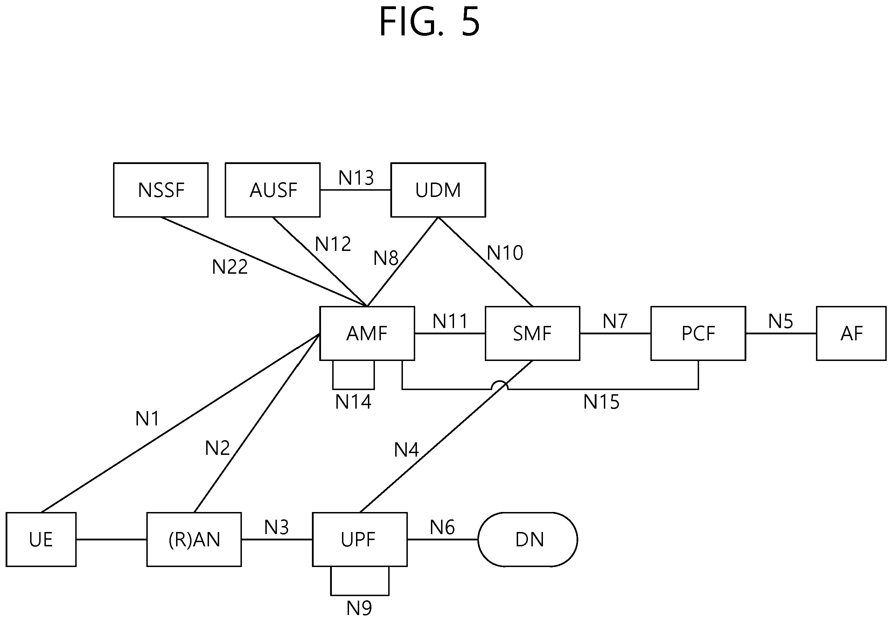

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Registration procedure>

A registration procedure is described. Section 4.2.2.2 of 3GPP TS 23.502 V16.3.0 (2019-12) can be referred.

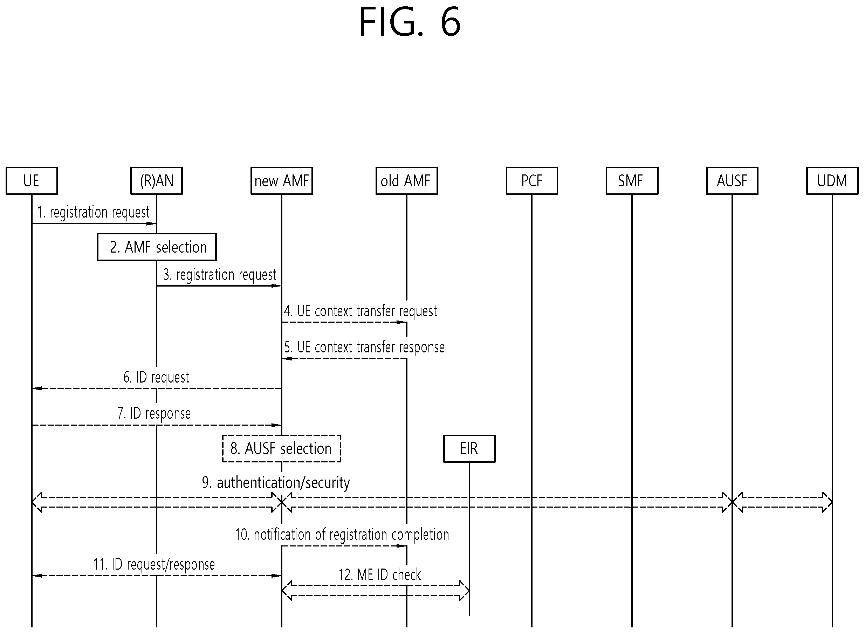

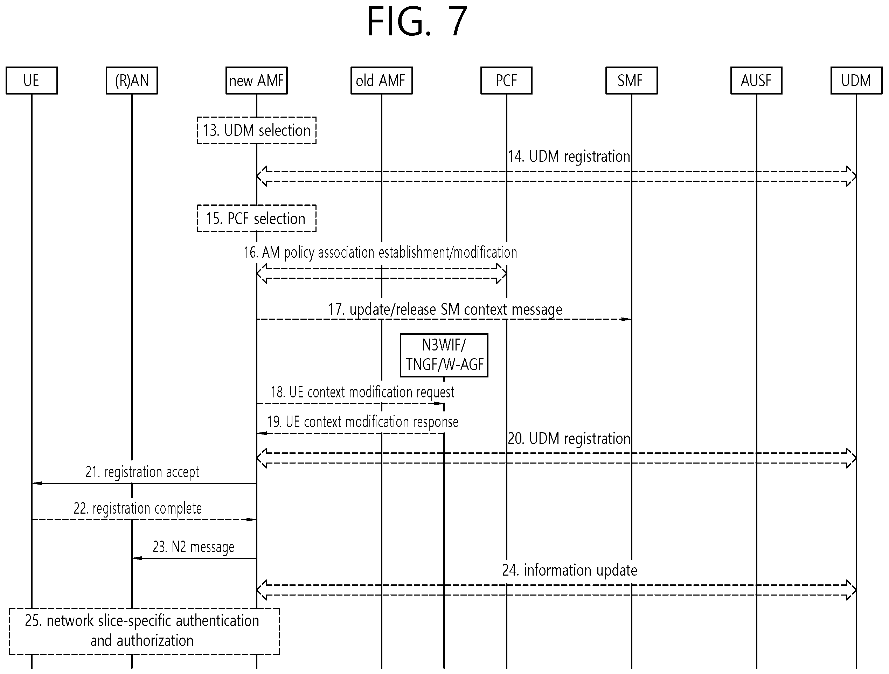

**FIGS. 6** **and** **7** **show an example of a registration procedure to which implementations of the present disclosure is applied.**

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6 and 7 applies on all these registration procedures, but the periodic registration update need not include all parameters that are used in other registration cases.

The general registration procedure in FIGS. 6 and 7 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6 are described.

### (1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

### (2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 7, which follow the procedures of FIG. 6, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

### < PDU session establishment procedure >

A PDU session establishment procedure is described. Section 4.3.2 of 3GPP TS 23.502 V16.3.0 (2019-12) can be referred.

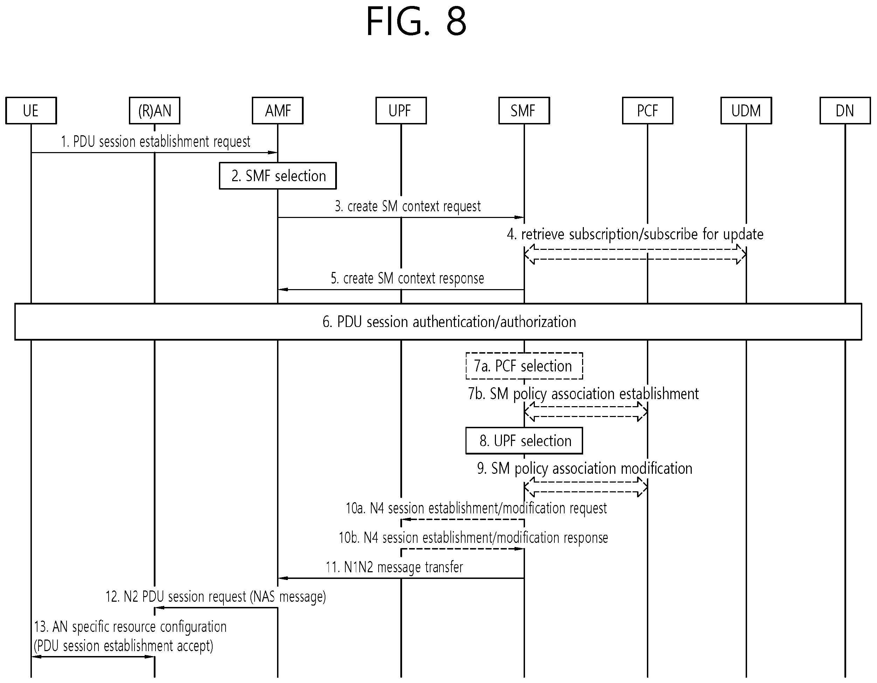

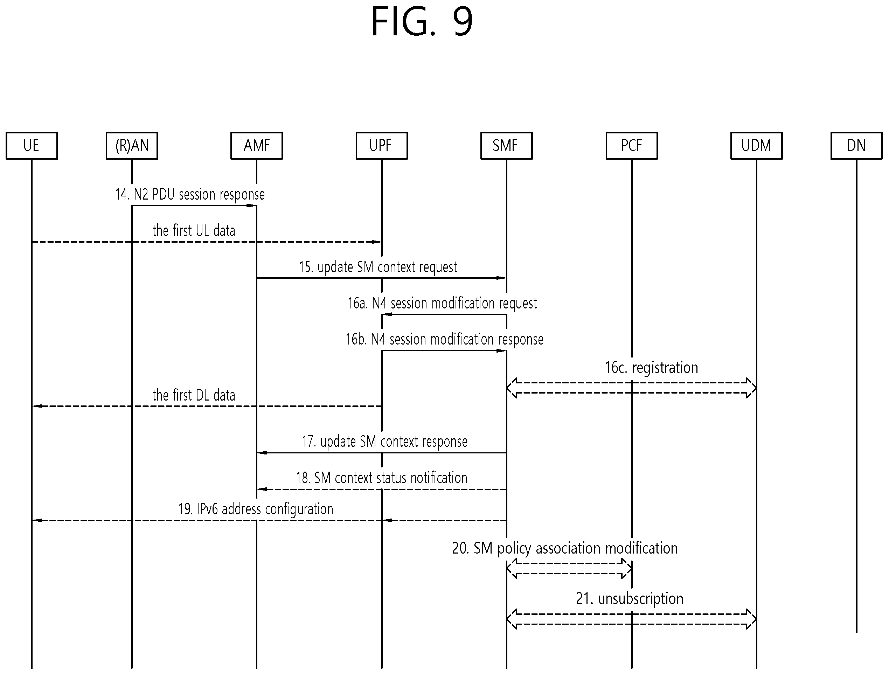

**FIGS. 8** **and** **9** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 8 and 9 specify the procedures for establishing PDU sessions associated with a single access type at a given time.

The procedure shown in FIGS. 8 and 9 assumes that the UE has already registered on the AMF thus unless the UE is emergency registered the AMF has already retrieved the user subscription data from the UDM.

First, procedures of FIG. 8 are described.

### (1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 9, which follow the procedures of FIG. 8, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <Dual 3GPP access>

### 1. Dual 5G satellite access

This use case describes a scenario where an autonomous ship is remotely controlled from shore. The ship has a UE that is served by two satellite RANs (GEO and LEO) belonging to the same PLMN that is managed by a 5G satellite operator. The ship UE has a single PLMN subscription.

Dual 5G satellite access is applied to accommodate high amount of data traffic for remote control operations. For better performance of the autonomous ship operations, the delay sensitive applications (e.g., remote control operations, collision/accident prevention, emergency management, etc.) use LEO satellite link as it has smaller UE to ground propagation delay than GEO satellite connection (max 30 ms for LEO vs max 280 ms for GEO, TS 22.261 clause 7.4.1). Other applications (i.e. delay tolerant, such as sensor data monitoring, video surveillance, etc.) may use GEO satellite link or aggregate the traffic over both accesses.

### 2. NTN-based dual 3GPP access

Aggregating two 3GPP access links simultaneously, of which one is non-terrestrial network, can provide the following 5G service enablers, relevant especially in underserved areas, characterized by limited bandwidth or un-reliable access link:
- Extended Mobile Broadband
- Ultra Reliable service communications

A number of service scenarios (e.g. user in residential homes in remote areas, users on board vehicles, high speed trains, vessels or airplanes), would benefit from the combination of terrestrial and non-terrestrial access or two different non-terrestrial access (e.g. GSO and NGSO based) to meet the targeted service performances in terms of data rate and/or reliability.

In underserved areas, the bandwidth provided by a terrestrial based access (e.g. NR or LTE) may be limited at cell edge. Adding a NTN based NG-RAN will be an enable to achieve the targeted experience data rate.

Under some scenarios such as on board high speed trains, the service area may not be fully homogeneous along the rail track and multi connectivity involving NTN-based NG-RAN would enable to provide the targeted reliability.

Hence a UE may be connected and served simultaneously by:
- One NTN-based 3GPP access and one terrestrial-based 3GPP access
- One NTN-based 3GPP access (NGSO) and another NTN-based 3GPP access (GSO)
- One NTN-based 3GPP access (NGSO) via two different satellites of the same constellation

The dual access combining can occur for either the uplink or the downlink or both.

The same or different gNB could serve NR cells via the terrestrial access network and via the satellite access network (e.g. with transparent payload on board the satellite).

NTN based NG-RAN may refer to transparent payload satellites as well as regenerative payload satellites with, for example, some gNB functions on board.

### 3. Inter-PLMN or PLMN-SNPN

This example scenario refers to a stadium, served by ad-hoc/in-venue 5G NR deployment (high-capacity) from one SNPN or PLMN network (MNO-A), plus 5G NR coverage, from the outside the stadium, by another PLMN (MNO-B). There is no NW sharing in place between the two 5G networks.

The above example may similarly apply to other local premises, e.g., campus, enterprise, mall, factory.

MNO-B has business and roaming partnership with MNO-A, including the agreement to lease extra capacity (from MNO-A) to provide ultra-broadband experience to some of MNO-B "golden" customers. The agreement between MNO-A&B entails the ability for those MNO-B users to get higher data rate connection, by allowing their data traffic to use an extra NR connectivity link from PLMN-A's (with anchor and aggregation in their HPLMN' CN). Such functionality is assumed to be supported by both PLMNs' CNs, UEs (of golden MNO-B users), and is associated with a set of traffic policies and conditions, negotiated by the MNOs, which the HPLMN can control and provision (to UEs and CN entities).

A UE may receive services via two 3GPP accesses (or 3GPP access links).

The two 3GPP accesses may be connected to a single Core Network (CN). Alternatively, the two 3GPP accesses may be connected to two CNs.

The CNs may be Public Land Mobile Networks (PLMNs) or Non-Public Networks (NPNs).

For some services, a PDU session created by the UE may be established via two 3GPP accesses. In this case, the PDU session may be a Multi-Access (MA) PDU session. Previously, an MA PDU session referred to a 3GPP access and a non-3GPP access, but the concept now extends to include two 3GPP accesses.

For some services, traffic may be steered, switched, or split via PDU sessions across two accesses.

Alternatively, for some services, a PDU session may be established via a single 3GPP access, and traffic may be transmitted via that session.

In the case of dual access (or dual steer), a terminal may have a single subscription.

In this case, conventionally, a terminal registered with only one core network for a 3GPP access.

However, to receive services via two 3GPP accesses, a terminal may separately register with two 3GPP accesses for a single 5G core network.

Alternatively, to receive services through two 3GPP accesses, the terminal may separately register with 3GPP access for each of the two 5G core networks.

If a terminal registers with two 5G core networks, decisions may need to be made regarding which core network to establish a PCU session for each service and which core network to transmit traffic to.

A terminal may simultaneously register with a single core network (PLMN or SNPN) using two 3GPP Radio Access Technology (RATs).

Alternatively, the terminal may simultaneously register with different core networks using two 3GPP Radio Access Technology (RATs). In this case, the PDU session establishment procedure may be performed for each of the different core networks.

The different core networks may both be PLMNs. Alternatively, the different core networks may both be SNPNs. Alternatively, one of the different core networks may be a PLMN and the other may be an SNPN. The 3GPP RATs may support various formats, such as NR+NR, NR+E-UTRA, TN-NTN, and NTN-NTN.

5GS supports EPC interworking using the N26 interface.

For EPC interworking, the 5G core network may assign an EPS bearer ID (EBI) to a QoS flow during PDU session establishment. Specifically, EBI allocation may be achieved by the SMF+PGW-C requesting to the AMF for EBI allocation.

For example, the 5G core network may allocate EBIs for interworking from 5GS to EPC during PDU session establishment.

If two PDU sessions are created, each session may be managed by a different SMF+PGW-C. Therefore, performing EBI allocation at the SMF+PGW-C may result in the same EBI being allocated to different QoS flows. For this reason, the AMF is responsible for allocating EBIs.

If a UE registers via dual access (dual 3GPP access), the UE may have two serving AMFs. In this case, different AMFs allocate EBIs, and problems may arise if the allocated EBIs are identical.

Since dual 3GPP registration is not supported in EPS, a method to prevent this situation is needed.

If EBIs are insufficient, the AMF must revoke EBIs based on ARP, S-NSSAI, local policy, etc. However, if the AMFs are different, this operation may not be possible.

The following describes a method for supporting EPC interworking in the case of dual 3GPP registration.

A method for supporting registration in dual 3GPP access may be composed of a combination of one or more of the operations, configurations, and steps described below.

In this specification, the terms UE (User Equipment) and terminal are used interchangeably.

In this specification, the terms Subscriber and User are used interchangeably.

In this specification, the terms AF (Application Function) and AS (Application Server) are used interchangeably.

The service operations used in this specification are examples, and similar service operations may be used, or new service operations may be defined and used.

The methods presented below may be performed or used in combination or complementary ways.

### I. First Embodiment - Method for Storing EBI in Another NF (e.g., UDM, V-PCF, new NF)

When an AMF allocates an EBI, it may store information about the allocated EBI in another NF. This EBI information may include one or more of the following: PDU session type/characteristics (e.g., single access PDU Session, MA PDU Session, dual 3GPP access MA PDU Session, etc.), PDU session ID, QoS flow information (e.g., QFI), EBI, and associated ARP information.

EBI information stored in another NF may be forwarded to another AMF. Since each AMF has information about the allocated EBI, the second AMF to allocate an EBI may assign an unallocated EBI value. This prevents the problem of identical EBIs being allocated.

If an AMF needs to allocate an EBI but has no available EBI, it may request another AMF for EBI revocation via another NF.

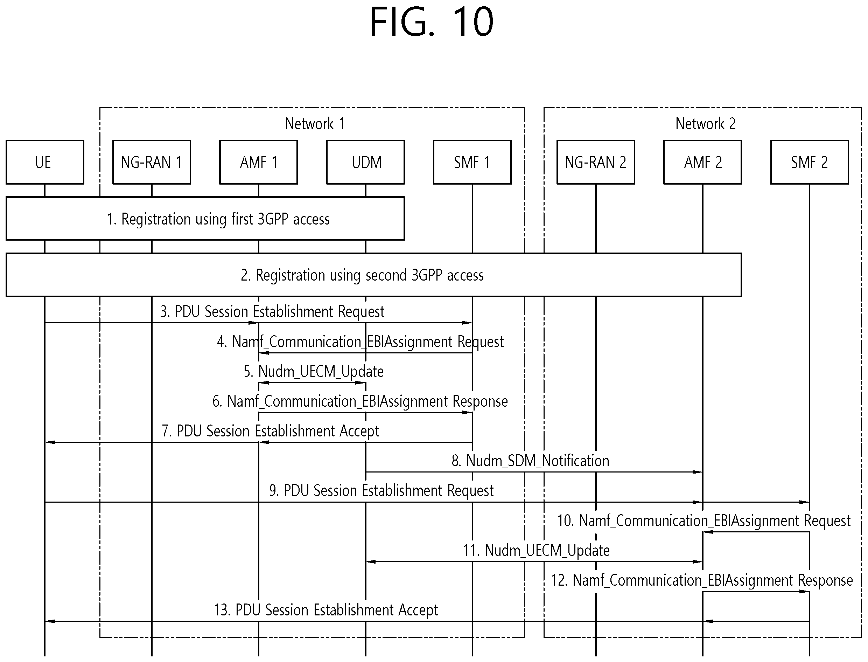

**FIG. 10** **shows an example flowchart according to the first embodiment of the present disclosure.**

Step 1. A terminal may register with network 1 using the first 3GPP access. The registration process of FIGS. 6-7 may be applied.

The terminal may transmit a registration request message to network 1.

The registration request transmitted by the terminal to network 1 may include information about an EBI already allocated to the UE. The information about the already allocated EBI may be transmitted to the AMF. In step 5, described below, the AMF may allocate an EBI that does not duplicate with the already allocated EBI based on the information about the already allocated EBI.

The registration request message may include information indicating that the terminal is performing dual registration (or dual 3GPP access).

The registration request message may include information about the capability of the terminal to perform dual registration (or dual 3GPP access).

During the registration process, based on subscriber information from the UDM, operator policies, network capabilities, etc., the AMF may transmit information to the terminal regarding whether dual registration (or dual 3GPP access) is permitted.

Based on whether dual registration (or dual 3GPP access) is permitted, steps 2 and 9 described below may be performed.

Step 2. The terminal may register with network 2 using the second 3GPP access. The registration process may be applied as shown in FIGS. 6-7. The terminal may send a registration request to network 2.

The registration request may include a subscription identifier (e.g., SUPI/SUCI). The AMF of network 2 may select/determine/detect a UDM based on the subscription identifier included in the registration request and receive subscriber information including EBI information from the UDM (step 8).

Network 1 may be an HPLMN, and network 2 may be a VPLMN.

Step 3. The UE may request PDU session establishment with Network 1 using the first 3GPP access. The PDU session establishment process may be applied as described in FIGS. 8-9.

The PDU session establishment request transmitted by the UE to Network 1 may include information about an EBI already allocated to the UE. The information about the already allocated EBI may be transmitted to the AMF. In step 5, described below, the AMF may allocate an EBI that does not duplicate the already allocated EBI based on the information about the already allocated EBI.

Step 4. The SMF may determine that EBI allocation is necessary. In this case, the SMF may request to the AMF (AMF 1) for EBI allocation. The EBI may be for the PDU session in step 3.

Step 5. The AMF may perform EBI allocation. The AMF may store the allocated EBI information in the UDM of Network 1 using the Nudm_UECM_Update service (or another new service).

The allocated EBI may be for a QoS flow associated with the PDU session in Step 3.

The AMF may receive subscriber information from the UDM, including information about the previously allocated EBI. In Step 5, the AMF may allocate an EBI different from the previously allocated EBI.

The allocated EBI information may be stored in the UDM as subscription data. Meanwhile, AMF 2 may perform an event subscription for subscriber information changes in the UDM during the registration process.

Therefore, once the allocated EBI information is stored as subscriber information, the UDM may transmit the stored EBI information to AMF 2 based on the event subscription performed by AMF 2 (step 8 described below).

If necessary (e.g., if the AMF needs to allocate an EBI but no EBIs are available), the AMF may perform a revocation of an existing EBI.

If revocation is required for an EBI allocated by another AMF, the AMF may request to the other AMF for revocation via the UDM.

The AMF may request revocation via the UDM simultaneously with the EBI allocation information, or it may perform EBI allocation after completing the revocation request and receiving a response.

The AMF may receive subscriber information for the terminal from the UDM through step 14 described in FIG. 7. The subscriber information may include information about EBIs already allocated to the terminal. Based on this information about the already allocated EBIs, the AMF may allocate an EBI to the terminal that does not duplicate with an EBI already allocated.

Step 5 may be performed after or concurrently with step 6.

Step 6. The AMF may transmit the allocated EBI information to the SMF.

Step 7. The SMF may send the UE a PDU Session Establishment accept (indicating successful PDU session establishment). At this time, the SMF may also send the UE the allocated EBI information (information about the EBIs allocated by AMF 1).

Step 8. The UDM may send the EBI information updated in step 5 to another AMF (AMF 2).

The UDM may determine that EPC interworking is not necessary for other 3GPP accesses. In this case, regardless of the EBI information actually allocated by AMF 1, the UDM may notify AMF 2 that all EBIs have been allocated. At this time, the UDM may set the ARP (Allocation and Retention Priority) of all allocated EBIs to the highest value to prevent AMF 2 from requesting revocation for the already allocated EBIs. This prevents the UE's second 3GPP access from being handed over to the EPC.

EBIs may be allocated per QoS flow. ARP may indicate the importance of a QoS flow. If an EBI allocation is required for a QoS flow with a high ARP but there are no more EBIs left to allocate, the EBI for the low ARP QoS flow may be revoked, allowing EBI allocation to the high ARP QoS flow.

Step 9. The UE may request PDU session establishment to Network 2 using the second 3GPP access. The PDU session establishment process may be applied as the contents of FIGS. 8-9.

Step 10. The SMF may determine that an EBI allocation is necessary. In this case, the SMF may request to the AMF (AMF 2) for EBI allocation.

Step 11. Based on the EBI information received in Step 8, the AMF (AMF 2) may allocate an EBI different from the previously allocated EBI (the EBI allocated by AMF 1).

The other allocated EBIs may be for QoS flows associated with the PDU session in step 9.

The AMF may store the allocated EBI information in the UDM of Network 1 as subscription data using the Nudm_UECM_Update service (or a new service may be used).

If necessary, the AMF may perform revocation of existing EBIs.

If revocation of an EBI allocated by another AMF is required, the AMF may request to the other AMF for revocation via the UDM.

The AMF may request revocation via the UDM simultaneously with the EBI allocation information, or it may perform EBI allocation after completing the revocation request and receiving a response.

Step 5 may be performed after or concurrently with step 6.

Step 12. The AMF may send the allocated EBI information to the SMF.

Step 13. The SMF may send a PDU session establishment accept (informing the terminal that the PDU session has been successfully established) to the terminal. At this time, the SMF may send the terminal the allocated EBI information (information about the EBI allocated by AMF 2).

### II. Second embodiment - A method for preventing the UDM from passing the subscription to the EPC through a core network type restriction when sending the subscription to the AMF.

When the UDM sends subscriber information to the serving AMF for a terminal's 3GPP access, the UDM may impose different core network type restrictions on each AMF.

The UDM may transmit information indicating that EPC is unavailable to one AMF. Furthermore, the UDM may transmit information indicating that EPC is available to another AMF.

In this case, only the AMF that has received the information indicating that EPC is available may allocate EBI.

Because the UDM notifies only one AMF that EPC is available, EBI allocation is performed only by the one AMF, preventing duplicate EBI allocation issues.

When performing Nudm_UECM_Registration, the AMF may transmit information such as RAT type information and the AMF's GUAMI to the UDM. This operation may be performed in step 14 of FIG. 7.

Based on the RAT type information, AMF's GUAMI, and other information, the UDM may determine whether to notify the AMF that EPC is unavailable.

The AMF may additionally notify the UDM of whether the terminal supports dual registration and that the terminal is performing dual registration. Based on this, the UDM may set core network type restrictions.

The network may provide the terminal with information to enable the terminal to use a specific RAT/network for a specific service. This may prevent interruption of services requiring EPC interoperability.

The information to enable the terminal to use a specific RAT/network for a specific service may be updated in the URSP rules in the form of information such as the preferred RAT type (e.g., NR (LEO), NR (GEO), E-UTRA, etc.) and the preferred network (PLMN ID, SNPN ID, etc.) and may be provided to the terminal.

### III. Embodiment 3 - A method for transmitting Nudm_UECM_DeregistrationNotification to all AMFs when the UDM receives an Update Location Request/Nudm_UECM_AMFDeregistration Request from the MME/HSS.

When a UE transitions to the EPC and performs a TAU, the MME may transmit an Update Location Request to the HSS/UDM. At this time, the UDM may send Nudm_UECM_DeregistrationNotification to the two serving AMFs that served the UE prior to interworking.

The AMF may then delete the UE's context according to conventional procedures. During this process, connections of UEs connected via other 3GPP access are naturally released, and all associated sessions may be released.

According to the prior art, when the AMF receives a Nudm _UECM_DeregistrationNotification from the UDM, the AMF performs an AN release to the base station (NG-RAN) and notifies the base station (NG-RAN) of the "cause value that indicates that the UE has already locally released the NG-RAN's RRC Connection." The base station may then perform a local release with the UE. Local release may mean that the base station deletes the UE's context without RRC signaling with the UE.

To prevent this local release, if the UE is in a dual 3GPP access registration state and the MME has not received the UE context, the AMF may perform an AN Release procedure without notifying the NG-RAN of the "cause value that indicates that the UE has already locally released the NG-RAN's RRC Connection." This allows for a normal RRC connection release.

When a terminal transitions to the EPC in one 3GPP access while dual-registered to 3GPP, after the EPC interworking procedure is performed, the terminal may request local release or RRC connection release for the 5GC connection in the other 3GPP access.

If the network supports the MUSIM Connection Release feature, the terminal may request to the AMF for connection release via NAS signaling.

### IV. Embodiment 4 - Method for a UE to Allocate EBI

According to the fourth embodiment, the terminal may allocate EBI without the AMF allocating EBI.

During the PDU session establishment process or QoS flow creation process (PDU Session Modification), the terminal may notify the SMF of its capability to allocate EBI.

Based on the terminal's capability, the SMF may request to the terminal for EBI allocation.

The SMF may directly request to the terminal for EBI allocation for a specific QoS flow.

The terminal may determine EBI allocation. For example, the terminal may allocate an EBI for the default QoS flow of a PDU session used for a specific service (e.g., a telephone service) and transmit it to the SMF. For example, the terminal may allocate an EBI and notify the SMF of this via a PDU session establishment request message.

For example, the UE-PCF (PCF for a UE) may transmit information to the terminal indicating that EBI allocation is required for a specific DNN/S-NSSAI in the URSP rule. To this end, the terminal may transmit capability information to the UE-PCF, indicating that the terminal supports EBI allocation via the UE PCF container. The UE-PCF (PCF for a UE) may be an NF responsible for generating URSP rules and transmitting them to the terminal.

For example, after the SMF transmits a PDU session establishment accept to the terminal, the SMF may request to the terminal for EBI allocation via a PDU Session Modification Command. The terminal may then allocate an EBI and transmit the allocated EBI information to the SMF via a PDU Session Modification Complete.

When generating EBIs, the terminal must ensure that they are allocated without duplication and, if necessary, may perform EBI revocation. For EBI revocation, the terminal may notify the SMF of the revoked EBI information. When an EBI is allocated or revocation by the terminal, the SMF may notify the AMF of this.

### 1. First Example of the Fourth Embodiment

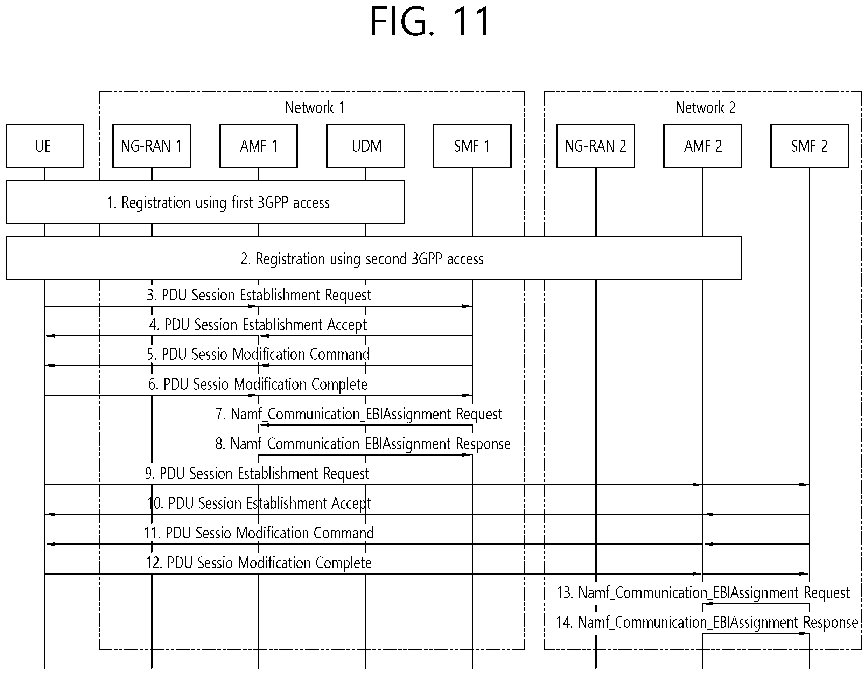

**FIG. 11** **shows an example of a flowchart according to the fourth embodiment of the present specification.**

Step 1. The terminal may register with network 1 using the first 3GPP access. The registration process may be implemented as shown in FIGS. 6-7.

Step 2. The terminal may register with network 2 using the second 3GPP access. The registration process may be implemented as shown in FIGS. 6-7.

Step 3. The terminal may request a PDU session establishment request to network 1 using the first 3GPP access. The PDU session establishment process may be implemented as shown in FIGS. 8-9.

The terminal may transmit capability information indicating that it supports EBI allocation to the SMF through the PDU session establishment request.

Alternatively, the terminal may transmit dual registration capability information to the AMF through the registration request in Step 1. The AMF may then store the dual registration capability information. After receiving a PDU session establishment request from the terminal, the AMF may send a PDU session establishment message to the SMF, including dual registration capability information.

Based on the dual registration capability information, the SMF may determine that the terminal is capable of EBI allocation.

Step 4. The SMF may send a PDU Session Establishment Accept message to the terminal.

The PDU Session Establishment Accept message may include an indication of the capability to support EBI allocation and whether EBI allocation is required.

Step 5. The SMF may send a PDU Session Modification Command message to the terminal. The PDU Session Modification Command message may include a QoS flow list required for EBI allocation and an EBI allocation request.

Step 6. The terminal may perform EBI allocation for the QoS flows requested by the SMF. The terminal may send a PDU Session Modification Complete message containing information about the allocated EBI to the SMF.

When the terminal allocates an EBI, it may store the allocated EBI. Then, when allocating an EBI in step 12 (described below), the terminal may allocate an EBI by avoiding the stored EBI. This prevents duplicate EBI allocation.

If necessary, the terminal may perform EBI revocation. To perform EBI revocation, the terminal may notify another SMF (SMF 2) or the same SMF (SMF 1) of the EBI revocation via a PDU Session Modification Request message. Upon receiving this, a SMF may notify the AMF of the EBI revocation.

Steps 7-8. The SMF may transmit the allocated EBI information to the AMF via the Namf_Communication_EBIAssignment Request. Alternatively, the EBI information can be transmitted via a newly defined service.

Step 9. The terminal may request PDU session establishment with Network 2 using the second 3GPP access. The PDU session establishment process may be applied as the contents of FIGS. 8-9.

The terminal may transmit capability information indicating its support for EBI allocation to the SMF through the PDU session establishment request.

Alternatively, the terminal may transmit dual registration capability information to the AMF through the registration request in Step 2. The AMF may then store the dual registration capability information. After receiving the PDU session establishment request from the terminal, the AMF may send the dual registration capability information to the SMF along with a PDU session establishment message.

Based on the dual registration capability information, the SMF may determine that the terminal is capable of EBI allocation.

Step 10. The SMF may send a PDU Session Establishment Accept message to the terminal.

The PDU Session Establishment Accept message may include the capability to support EBI allocation and an indication of whether EBI allocation is required.

Step 11. The SMF may send a PDU Session Modification Command message to the terminal. The PDU Session Modification Command message may include a QoS flow list required for EBI allocation and an EBI allocation request.

Step 12. The terminal may perform EBI allocation for the QoS flows requested by the SMF. The terminal may send a PDU Session Modification Complete message containing information about the allocated EBI to the SMF.

When the terminal allocates an EBI, based on the EBI stored in step 6, the terminal may allocate an EBI different from the one allocated in step 6. The terminal may store the newly allocated EBI information.

If necessary, the UE may perform EBI revocation. To perform EBI revocation, the UE may notify another SMF (SMF 2) or the same SMF (SMF 1) of the EBI revocation via a PDU Session Modification Request message. Upon receiving this, a SMF may notify the AMF of the EBI revocation.

Steps 13-14. The SMF may transmit, to the AMF, the allocated EBI information via a Namf_Communication_EBIAssignment Request. Alternatively, the EBI information may be transmitted via a newly defined service.

### 2. Second Example of the Fourth Embodiment

If the UE indicates that it has EBI allocation capability, the UE-PCF may include information indicating the need for EBI allocation in the URSP rule. For example, the RSD of the URSP rule may include information regarding whether EBI allocation is required.

The URSP rule including the aforementioned information may be transmitted to the terminal.

Based on the URSP rule, the terminal may include the allocated EBI information in a PDU session establishment request message and transmit it to the network.

A URSP rule (UE Route Selection Policy Rule) may include a list of RSDs (Route Selection Descriptors).

The list of RSDs may include multiple RSDs. One of the multiple RSDs may be an EBI Allocation RSD.

The EBI Allocation RSD may indicate whether the terminal needs to allocate an EBI for the default QoS flow of the PDU session. The EBI Allocation RSD indicating the need for EBI Allocation may be optional. For example, the EBI Allocation RSD may not be mandatory in the URSP rule.

### V. Embodiment 5 - method for notifying EBI information while registering with the AMF when EBI allocation has been performed

The terminal may receive allocated EBI information from the SMF. The EBI information (Mapped EPS bearer contexts information) allocated to the UE may be transmitted through procedures such as the PDU Session Establishment Accept and PDU Session Modification Command. In this case, if there is a change in the allocated EBI, the UE may transmit the EBI allocation information to the AMF of another 3GPP access.

The UE may include the allocated EBI information in a Registration Request message and send it to the AMF.

If the UE transitions from EPS to 5GS and performs registration and there is a locally released EPS bearer, the UE may include the EBI information in a Registration Request message and send it to the AMF.

The EPS Bearer Context Status information element may indicate the status of each EPS bearer context identified by the EPS Bearer Identity.

The EPS Bearer Context Status information element may be a Type 4 information element, 4 octets long.

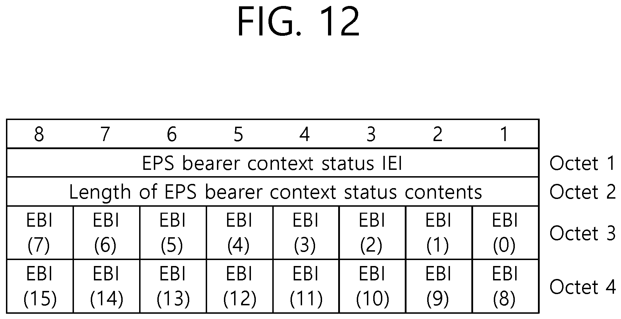

**FIG. 12** **shows an example of an EPS bearer context state information element according to an embodiment of the present specification.**

EBI(x) may be coded as follows:
- EBI(0): Bit 1 of octet 3 is for spare and is coded as 0.
- EBI(1) - EBI(15): 0 indicates that the ESM state of the corresponding EPS bearer context is BEARER CONTEXT-INACTIVE. 1 indicates that the ESM state of the corresponding EPS bearer context is not BEARER CONTEXT-INACTIVE.

The AMF may store the EBI information currently assigned to the UE in the UE context. Alternatively, the AMF may update the EBI information previously assigned to the UE.

When an EBI allocation change occurs for a UE, the UE may transmit the EBI bearer information while sending a registration request message to the AMF of another 3GPP access not associated with the specific PDU session.

When a UE receives changed mapped EPS bearer context information for a specific PDU session (e.g., the mapped EPS bearer context contains information for newly allocated EBIs or for releasing previously allocated EBIs), the AMF may transmit EBI bearer information along with a registration request message to the AMF of another 3GPP access point not associated with the specific PDU session.

This prevents duplicate EPS bearer allocations, as different AMFs can be aware of the EBI information allocated to the UE.

If EBI allocations occur simultaneously by different SMFs (i.e., different AMFs), a duplicate EBI may be allocated before the UE notifies the changed EBI information. In this case, the UE may request re-allocation or notify the SMF of the duplicate EBI via a PDU Session Modification Request or PDU Session Modification Complete message. Then, the SMF may request to the AMF for re-allocation.

Alternatively, the UE may only sequentially create one PDU session at a time. If the UE receives multiple PDU Session Modification Command messages simultaneously, it may process only one and temporarily reject the rest. The SMF may then perform the PDU Session Modification procedure again.

For this purpose, a new cause, such as one that indicates an EBI duplication, may be defined.

### VI. Embodiment 6 - EBI Allocation Method for MA PDU Sessions Using Dual 3GPP Access

For MA PDU sessions using 3GPP access and non-3GPP access, EBI allocation is performed only for the 3GPP access.

However, for MA PDU sessions using dual 3GPP access, EBI allocation may need to be performed for both 3GPP accesses.

For MA PDU sessions using dual 3GPP accesses, the same EBI must be allocated to both 3GPP accesses because they are identical PDU sessions. However, because the serving AMFs of each access are different, the same EBI may not be allocated.

To address this issue, the SMF of a dual 3GPP access MA PDU session may request to the AMF of one 3GPP access for EBI allocation and, once allocated, the SMF may transmit information about the allocated EBI to the AMF of the other 3GPP access.

Alternatively, as used in the first embodiment, the EBI information for the corresponding MA PDU session may be passed to the other AMF via a different NF.

If a terminal reports EBI information to another AMF, as in the fifth embodiment, the terminal may not simply report the activated EBI, but may also report EBI-related information (PDU session type/characteristics (e.g., single access PDU session, MA PDU session, dual 3GPP access MA PDU session, etc.), PDU session ID, QoS flow information (e.g., QFI)).

EPC interworking may be also supported for terminals registered via dual 3GPP access, allowing them to use services without interruption.

The following actions may be performed:
- When an AMF allocates an EBI, it stores it in another NF (e.g., UDM, V-PCF, new NF), and the stored information may be transmitted to the other AMF.
- If a UDM recognizes dual registration, it may impose core network restrictions, preventing one AMF from using EPC while allowing the other AMF to use EPC.
- When the UDM receives an Update Location Request/Numd_UECM_AMFDeregistration Request from the MME/HSS, it may send a Nudm _UECM_DeregistrationNotification to both 3GPP Access Serving AMFs.
- The UE may directly allocate an EBI and notify the SMF of this, and the SMF may then transmit the EBI information to the AMF.
- When an EBI allocation occurs, the UE may perform registration with the AMF and notify the AMF of the EBI information.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

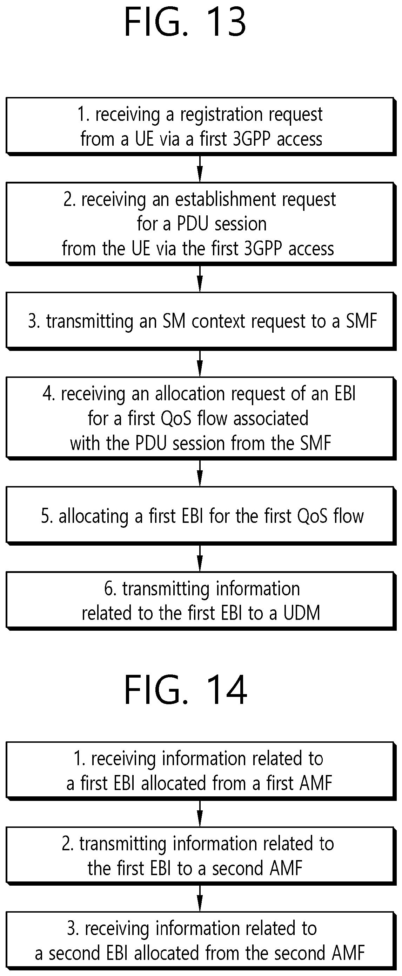

**FIG. 13** **shows the procedure of the AMF according to disclosure of the present specification.**
1. The AMF may receive a registration request from a User Equipment (UE) via a first 3rd Generation Partnership Project (3GPP) access.
2. The AMF may receive an establishment request for a Packet Data Unit (PDU) session from the UE via the first 3GPP access.
3. The AMF may transmit an SM context request to a Session Management Function (SMF), based on the establishment request.
4. The AMF may receive an allocation request of EPS bearer ID (EBI) for a first Quality of Service (QoS) flow associated with the PDU session from the SMF.

The first QoS flow may be associated with the first 3GPP access.

5. The AMF may allocate a first EBI for the first QoS flow, based on the allocation request.

6. The AMF may transmit information related to the first EBI to a Unified Data Management (UDM).

The information related to the first EBI may include at least one of the ID of the PDU session, information related to the first QoS flow, or ARP (Allocation and Retention Priority).

The information related to the first EBI may include information indicating whether the PDU session is one of the following sessions: i) a session via single access, ii) a MA (Multi-Access) PDU session, and iii) a MA PDU session via dual 3GPP access.

The AMF may receive subscriber information of the UE from the UDM.

The subscriber information may include information related to already allocated EBI to the UE.

The step of allocating the first EBI may comprise: allocating the first EBI by the AMF that does not duplicate with the already allocated EBI.

The registration request may include information related to already allocated EBI to the UE.

The step of allocating the first EBI may comprise: allocating the first EBI by the AMF that does not duplicate with the already allocated EBI.

The establishment request may include information related to already allocated EBI to the UE.

The step of allocating the first EBI may comprise: allocating the first EBI by the AMF that does not duplicate with the already allocated EBI.

The AMF may transmit an EBI revocation request to the UDM based on the allocation request, based on the AMF having no EBI to allocate.

The registration request may include information related to the capability for dual 3GPP access of the UE,

The AMF may transmit information related to whether the dual 3GPP access is allowed to the UE based on the information related to the capability of the dual 3GPP access.

The dual 3GPP access may include the first 3GPP access.

The step of transmitting information related to the first EBI to the UDM may be: performed based on the information related to the capability of the dual 3GPP access.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

**FIG. 14** **shows the procedure of the UDM according to disclosure of the present specification.**
1. The UDM may receive information related to a first EBI allocated from a first AMF.

The first AMF may be a serving AMF for a first 3GPP access of a UE.

The first EBI may be for a QoS flow associated with a PDU session for the UE.

The QoS flow may be associated with the PDU session for the UE and the first 3GPP.

2. The UDM may transmit information related to the first EBI to a second AMF.

The second AMF may be a serving AMF for a second 3GPP access of the UE.

3. The UDM may receive information related to a second EBI allocated from the second AMF.

Based on transmitting information related to the first EBI to the second AMF, the first EBI may be different from the second EBI.

The information related to the first EBI may include at least one of ID of the PDU session, QoS flow information, or ARP.

The information related to the first EBI may include information indicating whether the PDU session is one of the following sessions: i) a session via single access, ii) a MA (Multi-Access) PDU session, and iii) a MA PDU session via dual 3GPP access.

The UDM may receive an EBI revocation request from the first AMF, based on the first AMF having no EBIs to allocate.

The UDM may transmit the EBI revocation request to the second AMF.

The drawings below are created to illustrate specific examples of the present specification. The names of specific devices or names of specific signals/messages/fields depicted in the drawings are presented as examples, and therefore the technical features of the present specification are not limited to the specific names used in the drawings below.

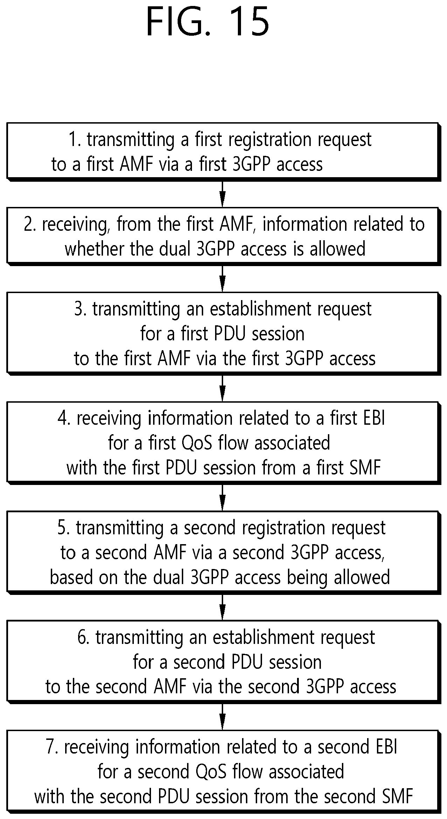

**FIG. 15** **shows the procedure of the UE according to disclosure of the present specification.**
1. The UE may transmit a first registration request to a first AMF via a first 3GPP access.
   The first registration request may include information related to capability for dual 3GPP access of the UE.
2. The UE may receive, from the first AMF, information related to whether the dual 3GPP access is allowed based on the information related to the capability for dual 3GPP access.
3. The UE may transmit an establishment request for a first PDU session to the first AMF via the first 3GPP access.
4. The UE may receive information related to a first EBI for a first QoS flow associated with the first PDU session from a first SMF.
5. The UE may transmit a second registration request to a second AMF via a second 3GPP access, based on the dual 3GPP access being allowed.
6. The UE may transmit an establishment request for a second PDU session to the second AMF via the second 3GPP access.
7.the UE may receive information related to a second EBI for a second QoS flow associated with the second PDU session from the second SMF.

The dual 3GPP access may comprise the first 3GPP access and the second 3GPP access,

The first EBI may be different from the second EBI.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: transmitting a first registration request to a first AMF via a first 3GPP access; wherein the first registration request includes information related to capability for dual 3GPP access of the UE, receiving, from the first AMF, information related to whether the dual 3GPP access is allowed based on the information related to the capability for dual 3GPP access; transmitting an establishment request for a first PDU session to the first AMF via the first 3GPP access; receiving information related to a first EBI for a first QoS flow associated with the first PDU session from a first SMF; transmitting a second registration request to a second AMF via a second 3GPP access, based on the dual 3GPP access being allowed; transmitting an establishment request for a second PDU session to the second AMF via the second 3GPP access; and receiving information related to a second EBI for a second QoS flow associated with the second PDU session from the second SMF; wherein the dual 3GPP access comprises the first 3GPP access and the second 3GPP access, wherein the first EBI is different from the second EBI.

Hereinafter, a processor for providing communication according to some embodiments of the present specification will be described.

The processor is configured to: transmitting a first registration request to a first AMF via a first 3GPP access; wherein the first registration request includes information related to capability for dual 3GPP access of the UE, receiving, from the first AMF, information related to whether the dual 3GPP access is allowed based on the information related to the capability for dual 3GPP access; transmitting an establishment request for a first PDU session to the first AMF via the first 3GPP access; receiving information related to a first EBI for a first QoS flow associated with the first PDU session from a first SMF; transmitting a second registration request to a second AMF via a second 3GPP access, based on the dual 3GPP access being allowed; transmitting an establishment request for a second PDU session to the second AMF via the second 3GPP access; and receiving information related to a second EBI for a second QoS flow associated with the second PDU session from the second SMF; wherein the dual 3GPP access comprises the first 3GPP access and the second 3GPP access, wherein the first EBI is different from the second EBI.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting a first registration request to a first AMF via a first 3GPP access; wherein the first registration request includes information related to capability for dual 3GPP access of the UE, receiving, from the first AMF, information related to whether the dual 3GPP access is allowed based on the information related to the capability for dual 3GPP access; transmitting an establishment request for a first PDU session to the first AMF via the first 3GPP access; receiving information related to a first EBI for a first QoS flow associated with the first PDU session from a first SMF; transmitting a second registration request to a second AMF via a second 3GPP access, based on the dual 3GPP access being allowed; transmitting an establishment request for a second PDU session to the second AMF via the second 3GPP access; and receiving information related to a second EBI for a second QoS flow associated with the second PDU session from the second SMF; wherein the dual 3GPP access comprises the first 3GPP access and the second 3GPP access, wherein the first EBI is different from the second EBI.

The present specification may have various effects.

For example, the problem of allocating the same EBI can be prevented through the procedure disclosed in this specification.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by an Access Mobility Function (AMF), comprising:
receiving a registration request from a User Equipment (UE) via a first 3rd Generation Partnership Project (3GPP) access;
receiving an establishment request for a Packet Data Unit (PDU) session from the UE via the first 3GPP access;
transmitting an SM context request to a Session Management Function (SMF), based on the establishment request;
receiving an allocation request of EPS bearer ID (EBI) for a first Quality of Service (QoS) flow associated with the PDU session from the SMF;
wherein the first QoS flow is associated with the first 3GPP access;
allocating a first EBI for the first QoS flow, based on the allocation request; and
transmitting information related to the first EBI to a Unified Data Management (UDM).

2. The method of claim 1,
wherein the information related to the first EBI includes at least one of the ID of the PDU session, information related to the first QoS flow, or ARP (Allocation and Retention Priority).

3. The method of claim 1 or claim 2,
wherein the information related to the first EBI includes information indicating whether the PDU session is one of the following sessions: i) a session via single access, ii) a Multi-Access (MA) PDU session, and iii) a MA PDU session via dual 3GPP access.

4. The method of one of the claims 1 to 3, further comprising:
receiving subscriber information of the UE from the UDM,
wherein the subscriber information includes information related to already allocated EBI to the UE,
wherein the step of allocating the first EBI comprises: allocating the first EBI by the AMF that does not duplicate with the already allocated EBI.

5. The method of one of the claims 1 to 4,
wherein the registration request includes information related to already allocated EBI to the UE,
wherein the step of allocating the first EBI comprises: allocating the first EBI by the AMF that does not duplicate with the already allocated EBI.

6. The method of one of the claims 1 to 4,
wherein the establishment request includes information related to already allocated EBI to the UE,
wherein the step of allocating the first EBI comprises: allocating the first EBI by the AMF that does not duplicate with the already allocated EBI.

7. The method of one of the claims 1 to 6, further comprising:
transmitting an EBI revocation request to the UDM based on the allocation request, based on the AMF having no EBI to allocate.

8. The method of one of the claims 1 to 6, further comprising:
wherein the registration request includes information related to the capability for dual 3GPP access of the UE,
transmitting information related to whether the dual 3GPP access is allowed to the UE based on the information related to the capability of the dual 3GPP access,
wherein the dual 3GPP access includes the first 3GPP access,
wherein the step of transmitting information related to the first EBI to the UDM is: performed based on the information related to the capability of the dual 3GPP access.

9. A method for performing communication, performed by a UDM, comprising:
receiving information related to a first EBI allocated from a first AMF;
wherein the first AMF is a serving AMF for a first 3GPP access of a UE;
wherein the first EBI is for a QoS flow associated with a PDU session for the UE,
wherein the QoS flow is associated with the PDU session for the UE and the first 3GPP;
transmitting information related to the first EBI to a second AMF; and
wherein the second AMF is a serving AMF for a second 3GPP access of the UE,
receiving information related to a second EBI allocated from the second AMF,
wherein, based on transmitting information related to the first EBI to the second AMF, the first EBI is different from the second EBI.

10. The method of claim 9,
wherein the information related to the first EBI includes at least one of ID of the PDU session, QoS flow information, or ARP.

11. The method of claim 9 or claim 10,
wherein the information related to the first EBI includes information indicating whether the PDU session is one of the following sessions: i) a session via single access, ii) a MA PDU session, and iii) a MA PDU session via dual 3GPP access.

12. The method of one of the claims 9 to 11, further comprising:
receiving an EBI revocation request from the first AMF, based on the first AMF having no EBIs to allocate; and
transmitting the EBI revocation request to the second AMF.

13. A method for performing communication, performed by a UE, comprising:
transmitting a first registration request to a first AMF via a first 3GPP access;
wherein the first registration request includes information related to capability for dual 3GPP access of the UE, receiving, from the first AMF, information related to whether the dual 3GPP access is allowed based on the information related to the capability for dual 3GPP access;
transmitting an establishment request for a first PDU session to the first AMF via the first 3GPP access;
receiving information related to a first EBI for a first QoS flow associated with the first PDU session from a first SMF;
transmitting a second registration request to a second AMF via a second 3GPP access, based on the dual 3GPP access being allowed;
transmitting an establishment request for a second PDU session to the second AMF via the second 3GPP access; and
receiving information related to a second EBI for a second QoS flow associated with the second PDU session from the second SMF;
wherein the dual 3GPP access comprises the first 3GPP access and the second 3GPP access,
wherein the first EBI is different from the second EBI.

14. An AMF, to perform communication, comprising:
a transceiver; and
a processor,
wherein the processor performs operation that is a method of one of the claims 1 to 8.

15. A UDM, to perform communication, comprising:
a transceiver; and
a processor,
wherein the processor performs operation that is a method of one of the claims 9 to 12.

16. A UE, to perform communication, comprising:
a transceiver; and
a processor,
wherein the processor performs operation that is a method of the claim 13.
